# EUROPEAN PATENT SPECIFICATION

(11) **EP 1 789 507 B1**
(45) Date of publication and mention of the grant of the patent: **05.11.2008**
(21) Application number: 05794145.2
(22) Date of filing: 30.08.2005
(51) Int. Cl.: C09D 133/16, C08K 5/521, C04B 41/49

(54) **ANIONIC/CATIONIC MASONRY SEALING SYSTEMS**
ANIONISCHE/KATIONISCHES MAUERDICHTUNGSSYSTEME
SYSTEMES D'ETANCHEITE ANIONIQUES/CATIONIQUES UTILISES EN MAÇONNERIE

(30) Priority: 01.09.2004 US 931848; 10.08.2005 US 200598
(43) Date of publication of application: 30.05.2007
(73) Proprietor: E.I. DU PONT DE NEMOURS AND COMPANY, Wilmington, DE 19898 (US)
(72) Inventor: CORMAN, Faye, Michelle, Barrington, New Jersey 08007-1222 (US); WYSONG, Ernest, Byron, Hockessin, Delaware 19707 (US)
(74) Representative: Heinemann, Monica
(86) International application number: PCT/US2005/030987
(87) International publication number: WO 2006/028854

(56) References cited:
- EP-A- 1 475 360
- WO-A-01/36526
- US-A- 4 931 505

## Description

### FIELD OF THE INVENTION

The present invention relates to treatment systems for hard surfaced materials which provide repellency without etching of the surface of the material.

### BACKGROUND OF THE INVENTION

Stone, masonry, concrete, unglazed tile, brick, porous clay and various other substrates with surface porosity are used decoratively in the indoor and exterior environment. However, oils, hydraulic fluids, and oily and aqueous foodstuffs, including, for instance, oils, coffee, ketchup, salad dressings, mustard, red wine, other beverages, and fruit preserves easily stain such surfaces. Many of the prior art treatments, such as clear sealants based on polyurethanes or epoxies, disadvantageously alter the appearance of the substrate. Such sealants can also trap moisture within the treated substrate, promoting spalling.

Longoria, et al. in U.S. Patent 6,271,289, and in WO 01/36526 describe a composition providing stain resistance to stone, masonry and other surfaces comprising a mixture of anionic fluoroalkyl phosphates and anionic fluoroacrylate polymers.

U.S. Patent 4,931,505 of Miyazaki et al. discloses a coating composition having weather resistance comprising A) a fluorine-containing copolymer having a fluorine content based on fluoroolefin of 10% by weight, and B) a fluorine-containing copolymer of a polyfluorocarbon chain-containing monomer with a hydrophilic group-containing monomer.

Fluorochemical copolymers, typically as aqueous dispersions, are used to impart water resistance and oil and grease repellency to paper and textile fibers as well as to calcitic and/or siliceous architectural and construction materials. Conventional commercial dispersions and dispersions having a low pH tend to etch marble and other calciferous substrates.

It is desirable to have compositions wherein the anionic phosphate can be combined with cationic polymers that provide superior oil and water repellency, stain resistance, and compatibility with substrate surfaces such as marble and limestone that are calcium carbonate compositions and thus susceptible to etching. The present invention provides such a composition.

### SUMMARY OF THE INVENTION

The present invention comprises a composition comprising an aqueous first mixture, having a maximum molar ratio of acid to base of 0.6 and providing water repellency when applied to a substrate surface without etching of said surface, of
A. an anionic aqueous fluoroalkyl phosphate solution which provides at least 75% of the total fluorine content of said first mixture comprising
   1) a second mixture of Formula IA of mono(perfluoroalkyl) phosphate and bis(perfluoroalkyl) phosphate,

      [R_{f}-(O)ⱼ]ₓ-P(O)-(O⁻X⁺)₍₃₋ₓ₎ Formula 1A

      wherein:
      R_{f} is selected from the group consisting of

         F(CF₂CF₂)_{d}(CH₂)ₐ-,

         F(CF₂CF₂)_{d}CH₂CH₂(OCH₂CH₂)_{b}-,

         F(CF₂CF₂)_{d}-,

         F(CF₂CF₂)_{d}CH=CH(CH₂)_{c}-,

         and

         C₈F₁₇SO₂N(R₅)CH₂CH₂-,
      a is from 2 to 10,
      b is from 3 to 20,
      c is from 2 to 20,
      d is 1 to 8, or a mixture thereof,
      R₅ is H or an aliphatic group containing 1 to 4 carbon atoms,
      x is from 1 to 2,
      j is 1 or 0, or a mixture thereof, and
      X is hydrogen or M,
      M is an ammonium ion, an alkali metal ion, or an alkanolammonium ion, or
   2) a phosphate of the structure of Formula IB 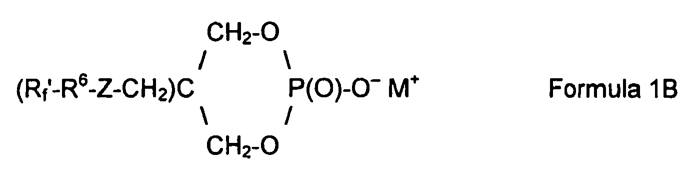 wherein
      R_{f}' is a fluoroaliphatic group having a linear or branched perfluorocarbon chain having from 2 to 20 carbon atoms,
      R⁶ is an alkylene group having from 1 to 8 carbon atoms,
      Z is -O-, -S-, or -NH-, and
      M is as defined above in Formula IA, and
B. a cationic fluoroalkyl(meth)acrylate or perfluoroalkylether (meth)acrylate copolymer present at a minimum of 0.3g per 100g of said first mixture, and comprising monomers copolymerized in the following percentages by weight:
   (a) from 40% to 92% of at least one monomer of formula 2A

      R_{f}'-Q-A-C(O)-C(R₇)=CH₂ 2A

      wherein:
      R_{f}' is a fluoroaliphatic group having a linear or branched perfluorocarbon chain having from 2 to 20 carbon atoms,
      R₇ is H or an aliphatic group containing 1 to 4 carbon atoms,
      A is O, S or NR¹ wherein R¹ is H or an alkyl of 1 to 4 carbon atoms, and
      Q is alkylene of 1 to 15 carbon atoms, hydroxyalkylene of 3 to 15 carbon atoms, -(CₙH₂ₙ)(OC_{q}H_{2q})ₘ-, -SO₂-NR¹(CₙH₂ₙ)-, or -CONR¹(CₙH₂ₙ)-, wherein R¹ is H or alkyl of 1 to 4 carbon atoms, n is 1 to 15, q is 2 to 4, and m is 1 to 15; and
      R is hydrogen or a C1 to C2 alkyl group,
   (b) from 1% to 50% of a monomer of formula 2B

      (CH₂=C(R₇)COW(CH₂)ᵣ⁺NR²R³R⁴)Y⁻ 2B

      wherein
      R₇ is H or an aliphatic group containing 1 to 4 carbon atoms,
      R² and R³ are each independently alkyl of 1 to 4 carbon atoms, hydroxyethyl, or benzyl or R² and R³ together with the nitrogen atom form a morpholine, pyrrolidine, or piperidine ring,
      R⁴ is H or alkyl of 1 to 4 carbon atoms or R², R³, and R⁴ together with the nitrogen form a piperidine ring,
      W is -O- or -NR⁴-
      r is 2 to 4, and
      Y⁻ is an anion,
      provided that the nitrogen is from 40% to 100% quaternized; and
   (c) from 0% to 20% of an anionic monomer or a monomer which is potentially anionic by varying the pH;
   (d) from 0% to 10% of a vinyl derivative of formula 2C

      R₈-CH=CH₂ 2C

      wherein
      R₈ is an alkyl carboxylate or alkyl ether group containing from 1 to 18 carbon atoms; and
   (e) from 0 to 25% of at least one monomer of formula 2D

      CH₂=C(R₉)-C(O)-O-V-OH 2D

      wherein
      R₉ is H or an alkyl of 1 to 4 carbon atoms, and
      V is an alkylene of from 2 to 4 carbon atoms; and
   (f) from 0 to 30% of any monomer other than the monomers of components (a) to (e) described above;
provided that the weight percents for components (a) to (f) described above total 100%.

The present invention further comprises a process for the preparation of a composition according to the invention comprising 1) addition of water to a dispersion of the cationic copolymer of component B and mixing to yield a diluted copolymer, 2) addition of the anionic fluoroalkyl phosphate solution of component A to the diluted copolymer of component B, and 3) mixing or homogenizing.

The present invention further comprises a method of treating a substrate-comprising application to the surface of the substrate of a composition as defined above, and the substrate so treated.

### DETAILED DESCRIPTION

Herein, trademarks are shown in upper case.

The term "(meth)acrylate", as used herein, indicates either acrylate or methacrylate.

The term "substrate surfaces", as used herein, includes porous mineral surfaces, such as stone, masonry, concrete, unglazed tile, brick, porous clay and various other substrates with surface porosity. Specific examples of such substrates include unglazed concrete, brick, tile, stone (including granite and limestone), grout, mortar, marble, limestone, statuary, monuments, wood composite materials such as terrazzo, and wall and ceiling panels including those fabricated with gypsum board. These are used in the construction of buildings, roads, parking ramps, driveways, floorings, fireplaces, fireplace hearths, counter tops, and other decorative uses in interior and exterior applications.

The present invention comprises fluorinated aqueous mixtures comprising a mixture of (1), an anionic aqueous fluoroalkyl phosphate solution neutralized with a dialkanolamine base and (2), a cationic copolymer of fluoroalkyl(meth)acrylate or perfluoroalkylether (meth)acrylate, preferably in the form of an aqueous dispersion.

The composition comprises a mixture, having a maximum molar ratio of acid to base of 0.6 and providing water repellency when applied to a substrate surface without etching of said surface, of A) an anionic aqueous fluoroalkyl phosphate solution which provides at least 75% of the total fluorine content of said composition, and B) a cationic copolymer of fluoroalkyl(meth)acrylate or perfluoroalkylether(meth)acrylate present at a minimum of 0.3g per 100g of said composition.

The mixtures of the present invention, when applied to substrate surfaces, provide oil and water repellency, and compatibility with substrate surfaces susceptible to etching, such as marble and limestone, particularly when polished. Both the specific solution and dispersion components and the ratios of components are varied to enhance desired performance attributes of the mixtures of the present invention for specific substrate surfaces. For instance, suppression of etching is desirable for a polished marble statue, but repellency may be more important for an unglazed ceramic tile.

The present invention further comprises the process of preparing the aqueous mixtures and for treating the substrate surfaces with the aqueous mixtures of this invention. The present invention also comprises substrate surfaces treated with the aqueous mixtures of this invention.

The present invention is an aqueous composition comprising a first mixture, having a maximum molar ratio of acid to base of 0.6 and providing water repellency when applied to a substrate surface without etching of said surface, of
A. an anionic aqueous fluoroalkyl phosphate solution which provides at least 75% of the total fluorine content of said first mixture comprising
   1) a second mixture of Formula IA of mono(perfluoroalkyl) phosphate and bis(perfluoroalkyl) phosphate,

      [R_{f}-(O)ⱼ]ₓ-P(O)-O⁻X⁺)₍₃₋ₓ₎ Formula 1A

      wherein:
      R_{f} is selected from the group consisting of

         F(CF₂CF₂)_{d}(CH₂)ₐ-,

         F(CF₂CF₂)_{d}CH₂CH₂(OCH₂CH₂)_{b}-,

         F(CF₂CF₂)_{d}-,

         F(CF₂CF₂)_{d}CH=CH(CH₂)_{c}-,

         and

         C₈F₁₇SO₂N(R₅)CH₂CH₂-;
      a is from 2 to 10, and preferably is 2
      b is from 3 to 20, and preferably is from 6 to 13,
      c is from 2 to 20, and preferably is 8
      d is 1 to 8, or a mixture thereof, and preferably is from 3 to 6,
      R₅ is H or an aliphatic group containing 1 to 4 carbon atoms,
      x is from 1 to 2,
      j is 1 or 0, or a mixture thereof, and
      X is hydrogen or M,
      M is an ammonium ion, an alkali metal ion, or an alkanolammonium ion, such as ethanolammonium or diethanolammonium, and is preferably ammonium, or
   2) a phosphate of the structure of Formula IB 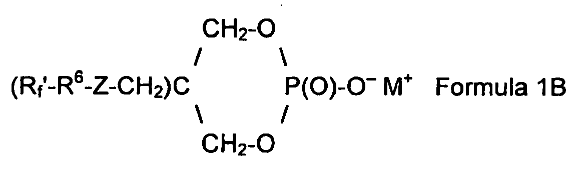 wherein
      R_{f}' is a fluoroaliphatic group having a linear or branched perfluorocarbon chain having from 2 to 20 carbon atoms,
      R⁶ is an alkylene group having from 1 to 8 carbon atoms, and is preferably ethylene,
      Z is -O-, -S-, or -NH-, and
      M is as defined above in Formula IA, and
B. a cationic fluoroalkyl(meth)acrylate or perfluoroalkylether (meth)acrylate copolymer present at a minimum of 0.3g per 100g of said first mixture, and comprising monomers copolymerized in the following percentages by weight:
   (a) from 40% to 92% of at least one monomer of formula 2A

      R_{f}'-Q-A-C(O)-C(R₇)=CH₂ 2A

      wherein:
      R_{f}' is a fluoroaliphatic group having a linear or branched perfluorocarbon chain having from 2 to 20 carbon atoms,
      R₇ is H or an aliphatic group containing 1 to 4 carbon atoms.
      A is O, S or NR¹ wherein R¹ is H or an alkyl of 1 to 4 carbon atoms, and
      Q is alkylene of 1 to 15 carbon atoms, hydroxyalkylene of 3 to 15 carbon atoms, -(CₙH₂ₙ)(OC_{q}H_{2q})ₘ-, -SO₂-NR¹(CₙH₂ₙ)-, or -CONR¹(CₙH₂ₙ)-, wherein R¹ is H or alkyl of 1 to 4 carbon atoms, n is 1 to 15, q is 2 to 4, and m is 1 to 15; and
   (b) from 1% to 50% of a monomer of formula 2B

      (CH₂=C(R₇)COW(CH₂)ᵣ⁺NR²R³R⁴)Y⁻ 2B

      wherein
      R₇ is H or an aliphatic group containing 1 to 4 carbon atoms, preferably alkyl, more preferably CH₃,
      R² and R³ are each independently alkyl of 1 to 4 carbon atoms, hydroxyethyl, or benzyl or R² and R³ together with the nitrogen atom form a morpholine, pyrrolidine, or piperidine ring,
      R⁴ is H or alkyl of 1 to 4 carbon atoms or R², R³, and R⁴ together with the nitrogen form a piperidine ring, W is -O- or -NR⁴-
      r is 2 to 4, and
      Y⁻ is an anion,
      provided that the nitrogen is from 40% to 100% quaternized;
   (c) from 0% to 20% of an anionic monomer or a monomer which is potentially anionic by varying the pH; such as alkene carboxylic acids (for example, (meth)acrylic acid), monoolefinic derivatives of sulfonic acid (for example acrylamidomethyl propane sulfonic acid), and their salts of alkali or alkaline-earth metals;
   (d) from 0% to 10% of a vinyl derivative of formula 2C

      R₈-CH=CH₂ 2C

      wherein
      R₈ is an alkyl carboxylate or alkyl ether group containing from 1 to 18 carbon atoms;
   (e) from 0 to 25% of at least one monomer of formula 2D

      CH₂=C(R₉)-C(O)-O-V-OH 2D

      wherein
      R₉ is H or an alkyl of 1 to 4 carbon atoms, and
      V is an alkylene of from 2 to 4 carbon atoms; and
   (f) from 0 to 30% of any monomer other than the monomers of components (a) to (e) described above;
provided that the weight percents for components (a) to (f) described above total 100%.

The fluoroalkylphosphates of component A of the composition of the present invention are prepared according to the method described by Longoria et al in US Patent 6,271,289, and Brace and Mackenzie, in US Patent 3,083,224. Typically, either phosphorus pentoxide (P₂O₅) or phosphorus oxychloride (POCl₃) are reacted with the fluoroalcohols to give mixtures of the mono- and bis(perfluoroalkyl)phosphoric acids. Neutralization, using common bases such as ammonium or sodium hydroxides provides the corresponding phosphates. Reacting an excess of fluoroalcohol with P₂O₅ followed by neutralization provides an equimolar mixture of mono(perfluoroalkyl)phosphate and bis(perfluoroalkyl)phosphate. Higher ratios of bis(perfluoroalkyl)phosphate are obtained by using the method of Hayashi and Kawakami in US Patent 4,145,382.

An example of a compound of Formula 1A is the reaction product formed from the partial esterification of a fluoroalcohol mixture of perfluoroalkylethyl alcohols and phosphoric acid that is largely, but not completely, in the form of the diethanolamine salt and having the formula:

(R_{f}CH₂CH₂O)ₓPO[OH]_{(3-x-y)}[O⁻⁺NH₂(CH₂CH₂OH)₂]_{y}.

The various molar ratios of the fluoroalcohol, phosphoric acid, and diethanolamine are identified by the format (x:1:y), thus the (2:1:1) salt is the bis(perfluoroalkylethyl) phosphate diethanolamine salt, the (1:1:2) salt is the perfluoroalkylethyl phosphate bis(diethanolamine salt) and the (1:1:1) salt is the perfluoroalkylethyl phosphate diethanolamine salt. The salts of the fluoroalkylphosphates are preferred over the corresponding acids by reason of their increased water solubility.

The cationic copolymers of component B of the composition of the present invention are prepared using various methods, generally, by polymerization of a monomer mixture. The copolymers are prepared by copolymerization of the monomers in solution in a distillable organic solvent. The term "distillable" solvent is understood to mean any organic solvent or solvent mixture whose boiling point at atmospheric pressure is less than 150°C. Next, the reaction mixture is diluted with water in the presence of a mineral or organic acid in order to quaternize the macromolecules. According to one variant in the preparation of these copolymers, this dilution step is carried out in the presence of hydrogen peroxide or is followed by a treatment by means of an aqueous hydrogen peroxide solution.

Preferably in the fluoromonomer, R_{f} is a straight chain perfluoroalkyl group of 2 to 20 carbon atoms, A is O, and Q is an alkylene of 1 to 15 carbon atoms. Suitable monomers include

CF₃CF₂(CF₂)ₓC₂H₄OC(O)-C(H)=CH₂

or

CF₃CF₂(CF₂)ₓC₂H₄OC(O)-C(CH₃)=CH₂

wherein x is an even integer of from 2 to 18, or mixtures thereof. More preferably the fluoromonomer is a perfluoroalkylethyl acrylate or methacrylate, with a perfluorocarbon chain length (R_{f}) distribution predominantly in the range of 8 to 14 carbons.

The most preferred perfluoroaliphatic monomer of formula 2A is that wherein R₇ is CH₃, and R_{f} is a mixture of perfluoroalkyl groups, CF₃CF₂(CF₂)ₛ-, wherein s is 2, 4, 6, 8, 10 and 12 in the approximate weight percent of 2, 35, 30, 18, 8, 3 respectively. Such a monomer has a weight average molecular weight of about 522. The corresponding acrylate monomer has a weight average molecular weight of about 508.

For these cationic copolymers, one preferred embodiment is to polymerize:
(a) the compounds of formula:

   R_{f}CH₂CH₂-O-CO-CH=CH₂

   wherein
   R_{f} is a perfluoroalkyl radical containing from 4 to 20 carbon atoms;
(b) dialkylaminoalkyl acrylate or a dialkylaminoalkyl methacrylate, or corresponding acrylamide or methacrylamide, as either the amine or quaternary ammonium salt.
(c) methacrylic acid as monomer; and
(d) vinyl acetate.

The fluoromonomers of formula 2A are prepared according to known processes, for example by esterification of the corresponding polyfluoro alcohols of formula

R_{f}-X-OH

using an alkenecarboxylic acid of formula

HO-CO-CR=CH-R

such as, for example, acrylic acid, methacrylic acid or crotonic acid, in the presence of a catalyst such as sulfuric acid or p-toluenesulfonic acid. Instead of the alkenecarboxylic acids, the esters, anhydrides or halides thereof are also suitable for use. Examples of polyfluoro alcohols include, in particular those below:

R_{f}-(CH₂)ₚ-SO₂NR-(CH₂)_{q}-OH

R_{f}-SO₂NR-(CH₂)_{q}-OH

R_{f}-(CH₂)ₚ-OH

R_{f}-(CH₂)ₚ-O-(CH₂)_{q}-OH

R_{f}-(CH₂)ₚ-S-(CH₂)_{q}-OH

R_{f}-(CH₂)ₚ-(O-CH₂CH₂)_{q}-OH

R_{f}-(CH₂)ₚ-SO₂-(CH₂)_{q}-OH

R_{f}-CO-NR-(CH₂)ₚ-OH

R_{f}-CO-O-(CH₂)ₚ-OH

R_{f}-CH=CH-(CH₂)ₚ-OH

in which R_{f} and R have the same meanings as above, and the symbols p and q, which are identical or different, each represent an integer ranging from 1 to 20 and, preferably, equal to 2 or 4. Alternatively, the fluoromonomers of formula 2A are prepared by tranesterification with methyl acrylate or methyl methacrylate, for example, as described in U.S. Patent No. 3,282,905.

Examples of monomers of formula 2A are the acrylates and methacrylates of the following amino alcohols: 2-dimethylaminoethanol, 2-diethylaminoethanol, 2- dipropylaminoethanol, 2-diisobutylaminoethanol, 2-N-tert- butylaminoethanol, 2-(N-tert-butyl-N-methylamino)ethanol, 2-morpholinoethanol, 2-(N-methyl-N-dodecylamino)ethanol, 2-(N-ethyl-N-octadecylamino)ethanol, 2-[N-ethyl-N-(2-ethylhexyl)amino]ethanol, 2-piperidinoethanol, 2-(1-pyrrolidinyl)ethanol, 3-diethylamino-1- propanol, 2-diethylamino-1-propanol, 1-dimethylamino-2-propanol, 4- diethylamino-1-butanol, 4-diisobutylamino-1-butanol, 1-dimethylamino-2-butanol, 4-diethylamino-2-butanol. These esters may be prepared, for example, according to the method described in U.S. Patent No. 2,138,763. The preferred monomer of formula 2A is dimethylaminoethyl methacrylate or N-tert-butylaminoethyl methacrylate.

The preferred monomer of the structure of formula 2B is a dialkylaminoalkyl acrylate or a dialkylaminoalkyl methacrylate, or corresponding acrylamide or methacrylamide, as either the amine or quaternary ammonium salt. Mixtures of the various salt forms are also operable herein. A preferred amine salt monomer is:

CH₂=C(R₇)CO₂CH₂CH₂N⁺H(C₂H₅)₂ Y⁻

Preferred quaternary ammonium monomers are:

CH₂=C(R₇)CO₂CH₂CH₂N⁺(CH₃)(C₂H₅)₂ Y⁻

and

CH₂=C(R₇)CONHCH₂CH₂CH₂N⁺(CH₃)₃ Y⁻

Preferably the quaternizable monomer of formula 2B is at least 40% quaternized for adequate solubilizing effect, but may be as high as 100% in this form. The quaternization is performed on the copolymer containing the free amine, or is carried out on the amine group before polymerization with equally good results.

The copolymer is quaternized using strong or moderately strong inorganic or organic acids, acids whose dissociation constant or whose first dissociation constant is greater than 10⁻⁵. These include hydrochloric acid, hydrobromic acid, sulfuric acid, nitric acid, phosphoric acid, acetic acid, formic acid, propionic acid or lactic acid. Acetic acid is preferably used. The copolymer is quaternized using suitable agents such as an acetate, halide, sulfate or other known quaternizing groups. Examples include methyl iodide, ethyl iodide, dimethyl sulfate, diethyl sulfate, benzyl chloride, trimethyl phosphate or methyl p-toluenesulfonate.

The amine salt monomers are prepared by reacting the corresponding tertiary dialkylaminoalkyl acrylate or dialkylaminoalkyl methacrylate ester or corresponding acrylamide or methacrylamide with an organic or inorganic acid, such as hydrochloric, hydrobromic, sulfuric or acetic acid. The tertiary dialkylaminoalkyl acrylate or dialkylaminoalkyl methacrylate esters are known in the art and can be prepared by either reacting a tertiary amine alcohol of the formula, HO(CH₂)ᵣNR²R³, wherein r is 2 to 4, with acryloyl or methacryloyl halide or, preferably, by transesterification with methyl acrylate or methyl methacrylate.

The tertiary dialkylaminoalkyl acrylamides or methacrylamides are prepared by acylating the corresponding dialkylaminoalkyl amine with acryloyl or methacryloyl halide in the presence of an acid acceptor such as triethylamine or pyridine.

The quaternary ammonium monomers are prepared by reacting the aforesaid acrylate or methacrylate esters or corresponding acrylamide or methacrylamide with a di-(lower alkyl) sulfate, a lower alkyl halide, trimethylphosphate or triethylphosphate. Dimethyl sulfate and diethyl sulfate are preferred quaternizing agents.

The nature of the anion, Y⁻, in the quaternary ammonium and amine salt monomer is, in general, determined by the method of synthesis. Usually, Y⁻ is a halide ion, such as chloride, bromide, or iodide, or an acetate ion, sulfate ion, phosphate ion, or an alkylsulfate ion. It is known, however, that quaternary ammonium salts can also be prepared by reacting a tertiary amine with an alkyl ester of benzene or toluenesulfonic acid; in such event, Y⁻ is a benzenesulfonate or toluenesulfonate anion.

The copolymers of component B of the composition of the present invention are obtained by polymerizing the monomers by conventional solvent polymerization techniques. Any of the conventional neutral solvents such as ethyl acetate, acetone, 1,2-dichlorotetrafluoroethane, 1,1,2-trichloro-1,2,2-trifluoroethane, tetrahydrofuran, dioxane, dimethylformamide, N-methyl-2-pyrrolidone, dimethyl sulfoxide, ethyl acetate, isopropyl acetate, butyl acetate, methylethylketone, ethanol, isopropanol, methylisobutylketone, or other ketones, esters and alcohols and mixtures thereof can be used. As polymerization solvent, it is preferred to use isopropanol, N-methyl-2- pyrrolidone (NMP), acetone or an NMP/acetone binary mixture. The total concentration of monomers may range from 5 to 60% by weight. The copolymer solutions can be diluted, if desired, with polymerization solvent and/or water. Alternatively, the copolymers can be isolated by removal of solvent. After polymerization, the above solvent can be retained in the final composition if required for an intended application, or it can be removed by distillation to form a waterborne composition with a very low volatile organic content. A dispersion of the composition is prepared using conventional means known to those skilled in the art.

The polymerization is carried out in the presence of one or more initiators which are used to a proportion of 0.1 to 1.5% relative to the total weight of monomers employed. Initiators which may be used are peroxides such as, for example, benzoyl peroxide, lauroyl peroxide, succinyl peroxide and tert-butyl perpivalate, or azo compounds such as 2, 2'-azobisisobutyronitrile, 4,4'-azobis(4-cyanopentanoic acid) and azodicarbonamide. Such Azo initiators are sold by E.I. du Pont de Nemours and Company, Wilmington, DE, commercially under the name of "VAZO" 67, 52 and 64, and by Wako Pure Industries, Ltd., under the name "V-501". The process may also be performed in the presence of UV radiation and photoinitiators such as benzophenone, 2- methylanthraquinone or 2-chlorothioxanthone.

The copolymer of component B is, preferably, copolymerised monomers of formulae 2A and 2B, in particular, a copolymer of perfluororalkylethyl(meth)acrylate and dimethylaminoethyl(meth)acrylate.

Conventional chain transfer agents, such as allyl mercaptans (preferably dodecylmercaptan), carbon tetrachloride, triphenylmethane, isooctyl thioglycolate, and crosslinking agents, such as ethylene dimethacrylate, can be used in amounts of 0.1 to 2 percent by weight of the monomers to control the molecular weight of the polymer.

The reaction temperature varies within a wide range, that is to say between room temperature and the boiling point of the reaction mixture. The process is preferably performed between 60° and 90°C.

The composition of the copolymers is preferably in the form of a dispersion. It is typically employed as an aqueous dispersion. Other monomers may optionally be incorporated into the copolymers to provide adhesion to specific substrate surfaces, impart film formation properties, provide stability at wider pH ranges, or provide compatibility with added solvents for specific applications. This optional monomer is any polymerizable monomer described above as components (c), (d) or (e). Up to 20%, and preferably from1 to 10%, of an anionic monomer or a monomer which is potentially anionic by varying the pH may be optionally incorporated. Such monomers include alkene carboxylic acids (for example, (meth)acrylic acid), monoolefinic derivatives of sulfonic acid (for example acrylamidomethyl propane sulfonic acid), and their salts of alkali or alkaline-earth metals. Up to 10% of a vinyl derivative of formula 2C, and up to 25% of a monomer of formula 2D, may also be incorporated into the copolymers. Examples of such include crosslinkable monomers such as glycidyl (meth)acrylate, (blocked) isocyanatoalkyl-(meth)acrylates, and acrylamides, vinyl monomers such as vinylidene chloride, alkyl (meth)acrylates such as ethylhexyl methacrylate and stearyl methacrylate, ionomers such as (meth)acrylic acid and sulfatoalkyl(meth)acrylates, nonionic water-soluble monomers such as polyoxyethylene (meth)acrylates, and aromatics such as styrene and vinyl toluene.

The compositions of the present invention, the components of which are defined above, are now further defined in terms of their concentration ranges. The composition of the present invention ready for application to the substrate surface, comprises a mixture of at least one anionic fluorophosphate and at least one cationic fluorocopolymer. The compositions are based on a total weight of 100 g, including water. Water, in an amount sufficient to provide the desired water content of the final mixture, is added to the cationic copolymer and mixed thoroughly. The fluoroalkyl phosphate is then added to the mixture of water and cationic copolymer and stirred or homogenized. The percent anionic fluoroalkyl phosphate component by weight in the mixture of the present invention is from 0.1% to 65%, and preferably from 3.5% to 62%, and most preferably from 11.8% to 25.7%. The percent cationic copolymer component by weight in the mixture of the present invention is from 0.1% to 51%, and preferably from 0.3% to 16%, and most preferably from 2.4% to 7.1%. Water is present at 35% to 98.5% such that the combined amounts of the three components add to 100%.

Anionic fluorophosphates alone provide no significant water repellency. Their pH (7 - 9) does not cause the etching of substrate surfaces containing calcium carbonate, such as marble. Conversely, the cationic polymers provide water repellency but their lower pH (3.5 - 5.5) does induce etching of such substrate surfaces. Thus, the two components must be blended to give a mixture with adequate stability which, (a) contains enough cationic fluoropolymer copolymer to provide water repellency, and (b) contains enough anionic fluorophosphate to suppress the etching properties of the cationic fluoropolymer copolymer. Requirement (b) is conveniently measured in terms of the percent total fluorine contributed by the anionic fluorophosphate.

The composition, preferably, further comprises a microbicide.

Thus, the compositions of the present invention require (i) a minimum weight of the fluorinated copolymer, namely 0.3 g/100 g composition, preferably 0.5 g/100g composition, and more preferably 0.7 g/100g composition; (ii) a minimum contribution of the total fluorine originating in the fluorophosphate component, namely 10% or more, preferably 80% or more, and more preferably 85% or more; and (iii) a maximum ratio of the moles of acid (e.g., acetic acid) contributed by the copolymer to the moles base (e.g., diethanolamine or ammonium hydroxide) contributed by the fluorophosphate. This acid/base ratio is not greater than 0.6, preferably not greater than 0.5, more preferably not greater than 0.4. The three requirements sequentially provide (i) a minimum level of copolymer to provide water repellency, (ii) a preponderance of the total fluorine content contributed by the fluorophosphate, and (iii) a sufficient excess of base, contributed by the fluorophosphate, to counteract the acetic acid contributed by the copolymer, thus suppressing surface etching of the treated substrate. The method for calculating the acid/base ratio is described below in Test Method 4.

The percent total fluorine in the mixture of the present invention, a mixture of anionic fluoroalkyl phosphate and cationic fluoroalkyl(meth)acrylate or fluoroalkyether(meth)acrylate copolymer) is from 0.25% to 7.5% by weight, preferably from 1% to 6.8% by weight, and most preferably from 2.5% to 6.5% by weight. Above 7% fluorine content in the mixture of the present invention, the formulation cost increases with less added benefit in terms of stain resistance or repellency, and, in certain formulations, the stain resistance property may even decrease.

Increasing the percent total fluorine in the composition typically increases the stain resistance of substrates treated with the compositions of the present invention. Example 10 (stain resist score 13, 2.86% F) and Example 7 (stain resist score 19, 0.84% F), for instance, have the same components, but Example 7 has a lower total percent fluorine and less effective stain resistance. In applications where stain resistance is of greater importance, component concentrations are adjusted to increase the total fluorine content to meet this requirement.

The present invention further comprises a process for the preparation of the above-described composition of the present invention. Since the composition of the present invention is a mixture of an anionic solution and a cationic dispersion, care is necessary in the preparation process to avoid coagulation or irreversible precipitation during the mixing stage. The addition of the fluoro(meth)acrylate polymer dispersion to the fluoroalkyl phosphate solution is prone to cause coagulation and is not recommended. Water, in an amount sufficient to provide the desired water content of the final mixture, is added to the cationic copolymer and mixed thoroughly. The amount of water added per 100g of composition of the present invention is equal to 100 minus the total weight in g of components A and B. Addition of the anionic fluoroalkyl phosphate solution to the water-diluted cationic fluoro(meth)acrylate polymer dispersion is recommended to minimize coagulation. The mixture is conducted at ambient temperature and pressure. Ideally, the components are mixed in the above order and then passed though a homogenizer. Where a homogenizer is used, samples are preferably homogenized at about 4000psi (27.6 MPa) for 2 passes in an APV Gaulin, Inc. Model 15MR Homogenizer, available from APV Americas, Lake Mills, Wisconsin. At the second pass the temperature of each sample is typically about 38°C. Those skilled in the art will know there are many other equivalent homogenizers that may be substituted. Typically a homogenizer is preferred but not required for preparing smaller volumes, such as laboratory mixtures with volumes of 1 L or less. The mixture is prepared at a ready-to-apply concentration (treating composition), or at a higher concentration for subsequent dilution prior to application.

Optionally, the mixture of the present invention may further comprise up to 10% by weight but preferably not more than 3% by weight of one or more water-miscible organic solvents such as alcohols, ketones and esters to improve penetration, drying and the stability of the emulsion. Examples include ethanol, methylisobutylketone and isopropyllactate. Organic solvents in the mixtures are preferably kept at a minimum for health, safety, pollution, and ecological reasons.

The mixture of the present invention also optionally further comprises conventional additives which are compatible with the mixture in aqueous solution or self-dispersed emulsion or dispersion form. In particular, the mixture additionally contains a microbicide. Suitable microbicides are well known to those skilled in the art. A preferred microbicide is PROXEL GXL from Avecia, Inc., Wilmington DE.

The present invention further comprises a method of treating a substrate surface to provide oil and water repellency to the substrate without etching the substrate surface comprising application of the composition of the present invention described above to the substrate surface. The composition of the present invention, at an application concentration containing total fluorine as described above, is applied to the substrate surface by conventional means, including, brush, spray, roller, doctor blade, wipe, and dip techniques, preferably using a first coating, followed by at least one additional coat using a wet-on-wet technique. More porous substrates may require subsequent additional coats. The wet-on-wet procedure comprises applying a first coat which is allowed to soak into the substrate but not dry (e.g., for 10-30 minutes) and then applying a second coat. Any subsequent coats are applied using the same technique as described for the second coat. The substrate surface is then allowed to dry under ambient conditions, or the drying can be accelerated by warm air if desired. The wet-on-wet application procedure provides a means to distribute or build up more of the protective coating at the substrate surface. A wet-on-wet application is preferred since, if the previous coat is allowed to dry, it tends to repel subsequent coats. For porous substrates, the coats should saturate the substrate surface.

The present invention further comprises substrates treated according to the method of the present invention. These substrates comprise porous surfaced materials used in interior and exterior construction applications. Especially suitable for use herein are substrates containing calcium carbonate which are susceptible to etching. However, a wide variety of construction substrates are suitable for use herein. Examples of such materials include unglazed concrete, brick, tile, stone (including granite and limestone), grout, mortar, composite materials such as terrazzo, wall and ceiling panels including those fabricated with gypsum board, marble, statuary, monuments, and wood. The treated substrates have repellency for water, oil and greases and provide protection against water- and oil-borne staining.

The compositions, method, and treated substrates of the present invention are useful in providing water repellency without etching of the surface for a variety of hard surfaces used for interior and exterior construction and decorative purposes. Total fluorine content can be adjusted to also provide stain resistance. Substrates having surface porosity are especially subject to staining and often difficult to protect without altering the appearance of the surface. The present invention provides protection while maintaining vapor permeability and the original appearance of the surface. Additionally, the mixtures of the present invention do not etch calciferous substrates such as marble and limestone, particularly when polished.

### MATERIALS

The following commercial fluorophosphates and fluorocopolymers were used in the Examples and Comparative Examples.

**Table 1**

| **Component Code*** | |
|---|---|
| **Aqueous Anionic Fluorophosphates** | |
| Q1 | Solution of mixed perfluoroalkylethyl phosphate diethanolamine salts, 16% (1:1:2), 16% (2:1:1), and 2% (1:1:1), in water and isopropanol |
| Q2 | Solution of mixed perfluoroalkylethyl phosphate diethanolamine salts, 16% (1:1:2), 16% (2:1:1), and 2% (1:1:1), in water and isopropanol |
| Q3 | Solution of mixed perfluoroalkylethyl phosphate ammonium salts, 5-9% (1:1:2), 5-9% (2:1:1), 0-2% (1:1:1), 24% ethylene glycol, and 1-3% alkoxypolyethyleneoxyethanol in water |

| **Aqueous Cationic Fluoroacrylate Copolymers** | |
|---|---|
| P1 | Aqueous dispersion of copolymer of perfluoroalkylethylmethacrylate/ diethylaminoethylmethacrylate |
| P2 | Aqueous dispersion of copolymer of pefluoroalkylethylacrylate/ dimethylaminoethylmethacrylate/ vinyl acetate |

| | |
|---|---|
| *Q1-Q3, and P1 and P2 are available from E.I. du Pont de Nemours and Company, Wilmington DE. | |

### TEST METHODS

### Application for Test Methods 1 and 2.

In all Examples, treating solutions were made by diluting the compositions defined in Table 1 and 2 in water to the desired treating concentration as defined in Table 2. A sponge was used to apply the product to three samples of each substrate surface and allowed to dry for five minutes, when the surface was wiped with the same sponge to remove any excess. The samples were allowed to sit for an additional 30 minutes before applying the second coat. The process was repeated until the number of desired coats were applied. Three coats of product were applied to limestone and two coats were applied to granite.

### Test Method 1. Determination of Water Repellency

This test method describes the procedure for testing the water repellency. Square tiles (12 in. square [30.5 cm²]) of a sample limestone (Crema Beida) and of granite were cut into 4 in. square (10.2 cm²) samples. After cutting the stone samples were rinsed to remove any dust or dirt and allowed to dry thoroughly, typically 3 days or more. Three tiles were used for each example, and the values averaged. Sample solutions to be tested were prepared and applied to the tiles as described above. After the treated tiles dried overnight, three drops of deionized water were placed on each tile and allowed to sit for 30 seconds. Visual contact angle measurements were used to determine water repellency. The following rating chart was used to determine contact angle using a 1 to 6 scale, as shown below:
Repellency Rating 1 (Excellent): Contact angle 100° - 120°.
Repellency Rating 2 (Very good): Contact angle 75° - 90°.
Repellency Rating 3 (Good): Contact angle 45° - 75°.
Repellency Rating 4 (Fair): Contact angle 25° - 45°.
Repellency Rating 5 (Poor): Contact angle 10° - 25°.
Repellency Rating 6 (Penetration): Contact angle <10°.
The repellency ratings were averaged to give a composite rating. Lower numbers indicate greater repellency with ratings of 1 to 4 being acceptable.

### Test Method 2. Determination of Stain Resistance.

Square tiles (12 in. square [30.5 cm²]) of a sample limestone (Crema Beida) and of granite were cut into 4 in. square (10.2 cm²) samples. After cutting the stone samples were rinsed to remove any dust or dirt and allowed to dry thoroughly, typically 3 days or more. Three tiles were used for each sample, and the values averaged. Sample solutions to be tested were prepared and applied to the tiles as described above. After the treated tiles dried overnight, three drops of deionized water were placed on each tile and allowed to sit for five minutes. The following food stains were placed at intervals on the surface of the treated and dried limestone and granite tiles and allowed to remain on the tile for 24 hours: 1) hot bacon grease, 2) cola, 3) black coffee, 4) grape juice, 5) Italian salad dressing, 6) ketchup, 7) lemon juice, 8) mustard, and 9) Wesson oil.

After a 24-hour period, the food stains were blotted or lightly scraped from the tile surface. The tile's surface was rinsed with water and a stiff bristle brush was used to scrub the surface 10 cycles back and forth. The tiles were then rinsed with water and allowed to dry for 24 hours before rating.

The stains remaining on the tile surfaces after cleaning were rated visually according to a scale of 0 to 5 as follows: 0 = no stain; 1 = very light stain; 2 = light stain; 3 = moderate stain; 4 = heavy stain; and 5 = very heavy stain. The ratings for each substrate type are summed for each of the stains to give a composite rating for each type. The maximum total score for one substrate was 9 stains times the maximum score of 5 = 45. Thus, the maximum for two substrates (granite and limestone) was twice the maximum score of 45 = 90. Lower scores indicated better stain protection with scores of 20 or less being acceptable and with zero indicating the best protection with no stain present. The summed results are shown in Table 2 below.

### Test Method 3: Determination of Etch

Each sample solution was evaluated on polished black marble. Three drops of each test solution were placed on black marble for five, thirty and sixty minutes, respectively. After each test period, the marble was visually rated for etch (gloss change) on a scale of 0 to 3 as follows: 0 = no etch; 1 = mild etch; 2 = moderate etch; and 3 = severe etch. Thus, a formulation showing no etch after 5 minutes, mild etch after 30 minutes, and moderate etch after 60 minutes is reported as "0, 1, 2". A "pass" represents a 0,0,0 score. Again, lower numbers indicate less etching. The etching results are shown in Tables 2 (pass/fail).

### Test Method 4. pH Measurement

pH values were measured with a Beckman 250 pH Meter (from Beckman Instruments, Inc., Fullerton, CA) and used in accordance with the manufacturer's instructions.

### EXAMPLES

Component codes for fluoroalkyl phosphates, fluoroalkyl(meth)acrylates, and commercial sealers are listed under MATERIALS in Table 1 above.

### Example 1

A penetrating solution was prepared by mixing 1.6 g of the cationic polymer P1 as defined in Tables 1 and 2, with 69.2 g of deionized water. The solution was mixed thoroughly and 28.6 g of the anionic phosphate Q3 as defined in Tables 1 and 2 was added, to yield 100 g penetrating solution. The penetrating solution contained a fluorine concentration of 2.86% fluorine by weight. The solution was applied to substrates as described in Test Method Application above. The substrate samples and untreated controls were stained and tested for water repellency, stain resistance, and etching according to Test Methods 1, 2, and 3, described above. The test results are shown in Table 2. Example 1 did not etch marble, had an acceptable water repellency rating of 3, and an acceptable stain resist rating of 15.

### Examples 2-19

Examples 2-19 were prepared and tested as described for Example 1, using the cationic polymer and anionic phosphate in the amounts listed in Table 2. The amount of deionized water used was varied (100 g minus total weight of polymer and phosphate) to yield 100 g of penetrating solution. The fluorine concentration and other characteristics of the penetrating solution are also shown in Table 2. The example solutions were applied to substrates as described in the Test Method Application above, and tested for water repellency, stain resistance, and etching according to Test Methods, 1, 2, and 3 described above. Test results are shown in Table 2. Each of these examples did not etch marble, and had an acceptable water repellency rating of 4 or less. The majority of these examples also had an acceptable stain resist rating of 20 or less.

### Comparative Examples A-I

Comparative Examples A-I were prepared and tested as in Examples 1-19 but failed Test Method 1 by having a water repellency rating of greater than 4, and/or failed Test Method 3 by demonstrating marble etching. The test results are shown in Table 2. Examples A through H contained less than 75% F from the phosphate component of the mixture. Example I, although having a high %F from phosphate, contained less than 0.3 g of the copolymer component in the mixture. This data demonstrates the need for a balance of both the copolymer and phosphate components in the mixture.

### Comparative Examples AA-GG

Comparative Examples AA-GG contained no fluoroacrylate polymer in the penetrating solution. The quantities of the fluorophosphates are described in Table 1 and were diluted with deionized water to a final penetrating solution weight of 100 g. The calculated percent fluorine all comes from the fluorophosphate. The penetrating solutions were applied to the substrates and tested for water repellency, stain resistance, and etching according to Test Methods 1, 2, and 3. The results are shown in Table 2. Fluorophosphates alone fail the requirements of Test Method 1, water repellency, by having a rating greater than 4.

### Comparative Examples HH-MM

Comparative Examples HH-MM contained no fluorophosphates in the penetrating solution. The quantities of the fluoropolymers are described in Table 1 and were diluted with deionized water to a final penetrating solution weight of 100 g. The calculated percent fluorine all comes from the fluoropolymer. The penetrating solutions were applied to the substrates and tested for water repellency, stain resistance, and etching according to Test Methods 1, 2, and 3. The results are shown in Table 2. Fluoropolymers alone fail the requirements of Test Method 3 by demonstrating marble etch.

**Table 2**

| Ex. # | Anionic Fluoro-phosphate | Phosphate in mix (g) | Cationic Fluoroacrylate Polymer | Polymer in mix (g) | % F from Phosphate | % F in Soln | Water repellency | Marble etch | Total Stain | Mixture Stability |
|---|---|---|---|---|---|---|---|---|---|---|
| **Examples** | | | | | | | | | | |
| 1 | Q3 (90%) | 28.6 | P1 (10%) | 2.2 | 90 | 2.86 | 3 | Pass | 15 | Very Good |
| 2 | Q3 (90%) | 28.6 | P2 (10%) | 2.4 | 90 | 2.86 | 4 | Pass | 11 | Very Good |
| 3 | Q2 (75%) | 3.7 | P1 (25%) | 1.6 | 75 | 0.84 | 2 | Pass | 13 | Good |
| 4 | Q1 (90%) | 15.1 | P1 (90%) | 2.2 | 90 | 2.86 | 3 | Pass | 19 | Very Good |
| 5 | Q2 (90%) | 15.1 | P1 (90%) | 2.2 | 90 | 2.86 | 3 | Pass | 23 | Very Good |
| 6 | Q1 (75%) | 3.7 | P2 (25%) | 1.7 | 75 | 0.84 | 2 | Pass | 19 | Good |
| 7 | Q2 (75% | 3.7 | P2 (25%) | 1.7 | 75 | 0.84 | 2 | Pass | 19 | Good |
| 8 | Q1 (90%) | 2.6 | P1 (10%) | 0.4 | 90 | 0.5 | 3 | Pass | 27 | Excellent |
| 9 | Q1 (90%) | 15.1 | P2 (10%) | 2.4 | 90 | 2.86 | 3 | Pass | 13 | Very Good |
| 10 | Q2 (90%) | 15.1 | P2 (10%) | 2.4 | 90 | 2.86 | 3 | Pass | 13 | Very Good |
| 11 | Q1 (90%) | 4.4 | P1 (10%) | 0.6 | 90 | 0.84 | 3 | Pass | 16 | Very Good |
| 12 | Q2 (90%) | 4.4 | P1 (10%) | 0.6 | 90 | 0.84 | 3 | Pass | 17 | Very Good |
| 13 | Q1 (90%) | 4.4 | P2 (10%) | 0.7 | 90 | 0.84 | 3 | Pass | 16 | Very Good |
| 14 | Q1 (95%) | 4.7 | P2 (5%) | 0.3 | 95 | 0.84 | 3 | Pass | 17 | Very Good |
| 15 | Q2 (95%) | 4.7 | P1 (5%) | 0.3 | 95 | 0.84 | 3 | Pass | 15 | Very Good |
| 16 | Q1 (95%) | 4.7 | P1 (5%) | 0.3 | 95 | 0.84 | 3 | Pass | 19 | Very Good |
| 17 | Q2 (95%) | 4.7 | P2 (5%) | 0.3 | 95 | 0.84 | 4 | Pass | 27 | Very Good |
| 18 | Q2 (90%) | 4.4 | P2 (10%) | 0.7 | 90 | 0.84 | 4 | Pass | 22 | Very Good |
| 19 | Q1 (75%) | 3.7 | P1 (25%) | 1.6 | 75 | 0.84 | 2 | Pass | 27 | Good |
| Control | None | None | None | None | None | None | 6 | N/A* | 53 | N/A* |

| **Comparative Examples, Blends** | | | | | | | | | | |
|---|---|---|---|---|---|---|---|---|---|---|
| A | Q1 (10%) | 0.5 | P1 (90%) | 5.8 | 10 | 0.84 | 2 | Fail | 14 | Poor |
| B | Q1 (10%) | 0.5 | P2 (90%) | 6.2 | 10 | 0.84 | 2 | Fail | 24 | Poor |
| C | Q2 (50%) | 2.5 | P1 (50%) | 3.2 | 50 | 0.84 | 2 | Fail | 18 | Fair |
| D | Q2 (50%) | 2.5 | P2 (50%) | 3.5 | 50 | 0.84 | 2 | Fail | 25 | Fair |
| E | Q2 (10%) | 0.5 | P1 (90%) | 5.8 | 10 | 0.84 | 3 | Fail | 16 | Poor |
| F | Q2 (10%) | 0.5 | P1 (90%) | 6.2 | 10 | 0.84 | 4 | Fail | 26 | Poor |
| G | Q1 (50%) | 2.5 | P2 (50%) | 3.5 | 50 | 0.84 | 5 | Fail | 27 | Fair |
| H | Q1 (50%) | 2.5 | P1 (50%) | 3.2 | 50 | 0.84 | 6 | Fail | 44 | Fair |
| I | Q1 (90%) | 1.3 | P1 (10%) | 0.2 | 90 | 0.25 | 6 | Pass | 33 | Excellent |

| **Comparative Examples, Single Components, Phosphates** | | | | | | | | | | |
|---|---|---|---|---|---|---|---|---|---|---|
| AA | Q3 (100%) | 31.8 | None (0%) | 0 | 100 | 2.86 | | Pass | 14 | Excellent |
| BB | Q2 (100%) | 4.9 | None (0%) | 0 | 100 | 0.84 | 5 | Pass | 16 | Excellent |
| CC | Q1 (100%) | 4.9 | None (0%) | 0 | 100 | 0.84 | 5 | Pass | 21 | Excellent |
| DD | Q1 (100%) | 16.8 | None (0%) | 0 | 100 | 2.86 | 5 | Pass | 19 | Excellent |
| EE | Q1 (100%) | 2.9 | None (0%) | 0 | 100 | 0.5 | 5 | Pass | 24 | Excellent |
| FF | Q2 (100%) | 16.8 | None (0%) | 0 | 100 | 2.86 | 6 | Pass | 25 | Excellent |
| GG | Q1 (100%) | 1.5 | None (0%) | 0 | 100 | 0.25 | 6 | Pass | 26 | Excellent |

| **Comparative Examples, Single Components, Polymers** | | | | | | | | | | |
|---|---|---|---|---|---|---|---|---|---|---|
| HH | None (0%) | 0 | P1 (100%) | 6.4 | 0 | 0.84 | 2 | Fail | 14 | Excellent |
| II | None (0%) | 0 | P2 (100%) | 23.6 | 0 | 2.86 | 2 | Fail | 27 | Excellent |
| JJ | None (0%) | 0 | P2 (100%) | 6.9 | 0 | 0.84 | 2 | Fail | 25 | Excellent |
| KK | None (0%) | 0 | P1 (100%) | 21.8 | 0 | 2.86 | 2 | Fail | 26 | Excellent |
| LL | None (0%) | 0 | P1 (100%) | 3.8 | 0 | 0.5 | 3 | Fail | 21 | Excellent |
| MM | None (0%) | 0 | P1 (100%) | 1.9 | 0 | 0.25 | 3 | Fail | 23 | Excellent |

| | | | | | | | | | | |
|---|---|---|---|---|---|---|---|---|---|---|
| *N/A: not applicable. (a) Control Examples indicate tests on the untreated substrates. | | | | | | | | | | |

The results in Table 2 showed that the compositions of the present invention exhibit a water repellency score of 4 or below and pass the etch test (Test Method 3). The compositions of the present invention contain not less than 0.3 g cationic copolymer in the mix, at least 75% of the total fluorine content originated from the perfluoroalkyl phosphate, and have a maximum molar ratio of acetic acid (from the cationic copolymer dispersion) to amine or ammonium hydroxide (from the perfluoroalkyl phosphate solution) of 0.6 (see Table 3). Also, all have good, very good or excellent solution stability. Mixture stability was judged without homogenization. Homogenization improves the mixture stability in all cases.

**Table 3**

| | Moles Acid and Base/100g | | | |
|---|---|---|---|---|
| Ex. # | Acetic Acid | Diethanolamine or NH₄⁺ | Acid/Base Ratio^{a} | Ratio = 0.6 or less |
| 1 | 0.908 | 0.733 | 0.0621 | Yes |
| 2 | 0.908 | 0.352 | 0.0325 | Yes |
| 3 | 0.645 | 0.733 | 0.492 | Yes |
| 4 | 0.591 | 0.733 | 0.181 | Yes |
| 5 | 0.645 | 0.733 | 0.166 | Yes |
| 6 | 0.591 | 0.352 | 0.273 | Yes |
| 7 | 0.645 | 0.352 | 0.251 | Yes |
| 8 | 0.591 | 0.733 | 0.191 | Yes |
| 9 | 0.591 | 0.352 | 0.0946 | Yes |
| 10 | 0.645 | 0.352 | 0.0867 | Yes |
| 11 | 0.591 | 0.733 | 0.169 | Yes |
| 12 | 0.645 | 0.733 | 0.155 | Yes |
| 13 | 0.591 | 0.352 | 0.0947 | Yes |
| 14 | 0.591 | 0.352 | 0.0380 | Yes |
| 15 | 0.645 | 0.733 | 0.0726 | Yes |
| 16 | 0.591 | 0.733 | 0.0791 | Yes |
| 17 | 0.645 | 0.352 | 0.0348 | Yes |
| 18 | 0.645 | 0.352 | 0.0867 | Yes |
| 19 | 0.591 | 0.733 | 0.537 | Yes |
| A | 0.591 | 0.733 | 14.39 | No |
| B | 0.591 | 0.352 | 7.379 | No |
| C | 0.645 | 0.733 | 1.455 | No |
| D | 0.645 | 0.352 | 0.763 | No |
| E | 0.645 | 0.733 | 13.19 | No |
| F | 0.645 | 0.733 | 14.10 | No |
| G | 0.591 | 0.352 | 0.833 | No |
| H | 0.591 | 0.733 | 1.588 | No |

| | | | | |
|---|---|---|---|---|
| (a) (acetic acid x amount of copolymer dispersion)/(diethanolamine or ammonia x amount of fluorophosphate solution). | | | | |

## Claims

1. A composition comprising an aqueous first mixture, having a maximum molar ratio of acid to base of 0.6 and providing water repellency when applied to a substrate surface without etching of said surface, of
A. an anionic aqueous fluoroalkyl phosphate solution which provides at least 75% of the total fluorine content of said first mixture comprising
1) a second mixture of mono(perfluoroalkyl) phosphate and bis(perfluoroalkyl) phosphate of Formula IA,
[R_{f}-(O)_{¡}]ₓ-P(O)-(O⁻X⁺)₍₃₋ₓ₎ Formula 1A
wherein:
R_{f} is selected from the group consisting of
F(CF₂CF₂)_{d}(CH₂)ₐ-,
F(CF₂CF₂)_{d}CH₂CH₂(OCH₂CH₂)_{b}-,
F(CF₂CF₂)_{d}-,
F(CF₂CF₂)_{d}CH=CH(CH₂)_{c}-,
and
C₈F₁₇SO₂N(R₅)CH₂CH₂-;
a is from 2 to 10,
b is from 3 to 20,
c is from 2 to 20,
d is 1 to 8, or a mixture thereof,
R₅ is H or an aliphatic group containing 1 to 4 carbon atoms,
x is from 1 to 2,
j is 1 or 0, or a mixture thereof, and
X is hydrogen or M,
M is an ammonium ion, an alkali metal ion, or an alkanolammonium ion, or
2) a phosphate of the structure of Formula IB 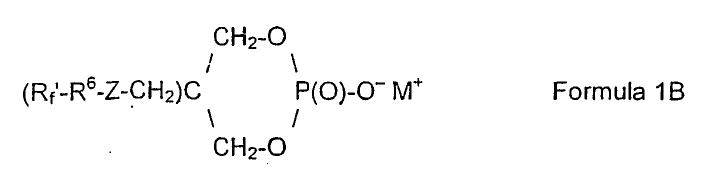 wherein
R_{f}' is a fluoroaliphatic group having a linear or branched perfluorocarbon chain having from 2 to 20 carbon atoms,
R⁶ is an alkylene group having from 1 to 8 carbon atoms,
Z is -O-, -S-, or -NH-, and
M is as defined above in Formula IA, and
3. a cationic fluoroalkyl(meth)acrylate or perfluoroalkylether (meth)acrylate copolymer present at a minimum of 0.3g per 100g of said first mixture, and comprising monomers copolymerized in the hollowing percentages by weight:
(a) from 40% to 92% of at least one monomer of formula 2A
R_{f}'-Q-A-C(O)-C(R₇)=CH₂ 2A
wherein:
R_{f}' is a fluoroaliphatic group having a linear or branched perfluorocarbon chain having from 2 to 20 carbon atoms,
R₇ is H or an aliphatic group containing 1 to 4 carbon atoms,
A is O, S or NR¹ wherein R¹ is H or an alkyl of 1 to 4 carbon atoms, and
Q is alkylene of 1 to 15 carbon atoms, hydroxyalkylene of 3 to 15 carbon atoms, -(CₙH₂ₙ)(OC_{q}H_{2q})ₘ-, -SO₂-NR¹(CₙH₂ₙ)-, or -CONR¹(CₙH₂ₙ)-, wherein R¹ is H or alkyl of 1 to 4 carbon atoms, n is 1 to 15, q is 2 to 4, and m is 1 to 15; and
R is hydrogen or a C1 to C2 alkyl group,
(b) from 1% to 50% of a monomer of formula 2B
(CH₂=C(R₇)COW(CH₂)ᵣ⁺NR²R³R⁴)Y⁻ 2B
wherein
R₇ is H or an aliphatic group containing 1 to 4 carbon atoms,
R² and R³ are each independently alkyl of 1 to 4 carbon atoms, hydroxyethyl, or benzyl or R² and R³ together with the nitrogen atom form a morpholine, pyrrolidine, or piperidine ring,
R⁴ is H or alkyl of 1 to 4 carbon atoms or R², R³, and R⁴ together with the nitrogen form a piperidine ring,
W is -O- or -NR⁴-
r is 2 to 4, and
Y⁻ is an anion,
provided that the nitrogen is from 40% to 100% quaternized; and
(c) from 0% to 20% of an anionic monomer or a monomer which is potentially anionic by varying the pH;
(d) from 0% to 10% of a vinyl derivative of formula 2C
R₈-CH=CH₂ 2C
wherein
R₈ is an alkyl carboxylate or alkyl ether group containing from 1 to 18 carbon atoms; and
(e) from 0 to 25% of at least one monomer of formula 2D
CH₂=C(R₉)-C(O)-O-V-OH 2D
wherein
R₉ is H or an alkyl of 1 to 4 carbon atoms, and
V is an alkylene of from 2 to 4 carbon atoms; and
(f) from 0 to 30% of any monomer other than the monomers of components (a) to (e) described above;
provided that the weight percents for components (a) to (f) described above total 100%.

2. The composition of claim 1 wherein the fluoroalkyl phosphate solution of component A is a mixture of mono(perfluoroalkyl) phosphate and bis(perfluoroalkyl) phosphate of Formula IA.

3. The composition of claim 2 wherein the fluoroalkyl phosphate solution of component A is a mixture of perfluoroalkylethyl phosphate diethanolamine salts.

4. The composition of claim 1 wherein the copolymer of component B is copolymerized monomers of formula 2A and formula 2B.

5. The composition of claim 4 wherein component B is a copolymer of perfluoroalkylethyl(meth)acrylate, and dimethylaminoethyl(meth)acrylate.

6. The composition of claim 1 further comprising a microbicide.

7. The composition of claim 1 wherein 80% of the total fluorine content is in the fluoroalkyl phosphate solution.

8. The composition of claim 1 wherein the total fluorine content is from 0.25 to 7.5 percent by weight.

9. A process for the preparation of a composition of claim 1 comprising 1) addition of water to a dispersion of the cationic copolymer of component B and mixing to yield a diluted copolymer, 2) addition of the anionic fluoroalkyl phosphate solution of component A to the diluted copolymer of component B, and 3) mixing or homogenizing.

10. The process of claim 9 wherein the amount of water added to component B per 100g of composition is equal to 100 minus the total weight of component A and component B.

11. A method of treating a substrate comprising application to the surface of the substrate of a composition of claim 1.

12. The method of claim 11 wherein the composition is applied as a first coating followed by at least one additional coating.

13. The method of claim 12 wherein the additional coating is applied prior to the first coating becoming dry.

14. The method of claim 11 wherein the substrate is a composition containing calcium carbonate.

15. The method of claim 11 wherein the substrate is unglazed concrete, brick, tile, stone, granite, limestone, grout, mortar, composite materials, gypsum board, marble, statuary, monuments, or wood.

16. A substrate treated with the composition of claim 1.

17. The substrate of claim 16 which is a composition containing calcium carbonate.

18. The substrate of claim 16 which is unglazed concrete, brick, tile, stone, granite limestone, grout, mortar, composite materials, gypsum board, marble, statuary, monuments, or wood.

## Patentansprüche

1. Zusammensetzung, die eine flüssige erste Mischung mit einem maximalen Verhältnis von Säure zu Base von 0,6 aufweist und beim Auftrag auf einer Substratoberfläche Wasserabweisungsvermögen vermittelt, ohne dass die Oberfläche geätzt wird, aus
A. einer anionischen, wässrigen Lösung von Fluoralkylphosphat, die mindestens 75% des Gesamtgehaltes an Fluor der ersten Mischung bereitstellt, wobei die Mischung aufweist:
1) eine zweite Mischung von Mono(perfluoralkyl)phosphat und Bis(perfluoralkyl)phosphat der Formel IA:
[R_{f}-(O)ⱼ]ₓ-P(O)-(O⁻X⁺)₍₃₋ₓ₎ Formel 1A
worin:
R_{f} ausgewählt ist aus der Gruppe, bestehend aus:
F(CF₂CF₂)_{d}(CH₂)ₐ-,
F(CF₂CF₂)_{d}CH₂ CH₂(OCH₂CH₂)_{b}-,
F(CF₂CF₂)_{d}-,
F(CF₂CF₂)_{d}CH=CH(CH₂)_{c}-
und
C₈F₁₇SO₂N(R₅)CH₂CH₂-;
a beträgt 2 bis 10,
b beträgt 3 bis 20,
c beträgt 2 bis 20,
d beträgt 1 bis 8, oder eine Mischung davon,
R₅ ist H oder eine aliphatische Gruppe mit 1 bis 4 Kohlenstoffatomen,
x beträgt 1 bis 2,
j beträgt 1 oder 0 oder eine Mischung davon und
X ist Wasserstoff oder M,
M ist ein Ammonium-Ion, ein Alkalimetall-Ion oder ein Alkanolammonium-Ion, oder
2) ein Phosphat der Struktur der Formel IB 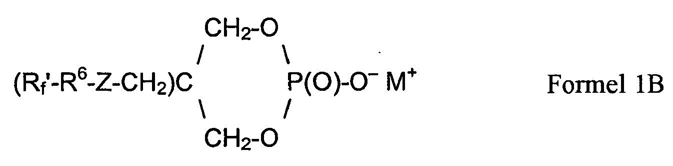 worin
R_{f}' eine fluoraliphatische Gruppe mit einer geradkettigen oder verzweigten Perfluorkohlenstoff-Kette ist, die 2 bis 20 Kohlenstoffatome hat,
R⁶ ist eine Akylen-Gruppe mit 1 bis 8 Kohlenstoffatomen,
Z ist -O-, -S- oder -NH- und
M ist wie vorstehend in Formel IA festgelegt, und
B. einem kationischen Fluoralkyl(meth)acrylat- oder Perfluoralkylether(meth)acrylat-Copolymer, das mit einem Minimum von 0,3 g pro 100 g der ersten Mischung vorliegt und Monomere aufweist, die in den folgenden prozentualen Gewichtsanteilen copolymerisiert sind:
(a) von 40% bis 92 Prozent mindestens eines Monomers der Formel 2A:
R_{f}'-Q-A-C(O)-C(R₇)=CH₂ 2A
worin:
R_{f}' eine fluoraliphatische Gruppe mit einer geradkettigen oder verzweigten Perfluorkohlenstoff-Kette ist, die 2 bis 20 Kohlenstoffatome hat,
R₇ ist H oder eine aliphatische Gruppe, die 1 bis 4 Kohlenstoffatome enthält,
A ist O, S oder NR¹, worin R¹ H ist oder ein Alkyl mit 1 bis 4 Kohlenstoffatomen und
Q ist Alkylen mit 1 bis 15 Kohlenstoffatomen, Hydroxyalkylen mit 3 bis 15 Kohlenstoffatomen, - (CₙH₂ₙ)(OC_{q}H_{2q})ₘ-, -SO₂-NR¹(CₙH₂ₙ)- oder -CONR¹(CₙH₂ₙ)-, worin R¹ H ist oder Alkyl mit 1 bis 4 Kohlenstoffatomen, n beträgt 1 bis 15, q beträgt 2 bis 4 und m beträgt 1 bis 15; und
R ist Wasserstoff oder eine C1- bis C2-Alkyl-Gruppe,
(b) von 1% bis 50 Prozent eines Monomers der Formel 2B
(CH₂=C(R₇)COW(CH₂)ᵣ⁺NR²R³R⁴)Y⁻ 2B
worin
R₇ H ist oder eine aliphatische Gruppe mit 1 bis 4 Kohlenstoffatomen,
R² und R³ sind jeweils unabhängig Alkyl mit 1 bis 4 Kohlenstoffatomen, Heteroethyl oder Benzyl, oder R² und R³ bilden zusammen mit dem Stickstoffatom einen Morpholin-, Pyrrolidin- oder Piperidin-Ring,
R⁴ ist H oder ein Alkyl mit 1 bis 4 Kohlenstoffatomen, oder R², R³ und R⁴ bilden zusammen mit dem Stickstoffatom einen Piperidin-Ring,
W ist -O- oder -NR⁴-
r beträgt 2 bis 4 und
Y⁻ ist ein Anion,
mit der Maßgabe, dass der Stickstoff zu 40% bis 100 Prozent quaternisiert ist, und
(c) von 0% bis 20 Prozent eines anionischen Monomers oder eines Monomers, das potentiell anionisch ist, indem der pH-Wert verändert wird;
(d) von 0% bis 10 Prozent eines Vinyl-Derivats der Formel 2C:
R₈-CH=CH₂ 2C
worin
R₈ eine Alkylcarboxylat- oder Alkylether-Gruppe mit 1 bis 18 Kohlenstoffatomen ist; und
(e) ) von 0% bis 20 Prozent mindestens eines Monomers der Formel 2D:
CH₂=C(R₉)-C(O)-O-V-OH 2D
worin:
R⁹ H ist oder ein Alkyl mit 1 bis 4 Kohlenstoffatomen und
V ist eine Alkyl-Gruppe mit 2 bis 4 Kohlenstoffatomen; und
(f) von 0% bis 30 Prozent eines beliebigen anderen Monomers als die Monomere der Komponenten (a) bis (e), wie sie vorstehend beschrieben wurden;
mit der Maßgabe, dass der prozentuale Gewichtsanteil der Komponenten (a) bis (f), wie vorstehend beschrieben wurde, insgesamt 100 Prozent beträgt.

2. Zusammensetzung nach Anspruch 1, wobei die Fluoralkylphosphat-Lösung von Komponente A eine Mischung von Mono(perfluoralkyl)phosphat und Bis(perfluoralkyl)phosphat der Formel IA ist.

3. Zusammensetzung nach Anspruch 2, wobei die Fluoralkylphosphat-Lösung von Komponente A eine Mischung von Perfluoralkylethylphosphatdiethanolamin-Salzen ist.

4. Zusammensetzung nach Anspruch 1, wobei das Copolymer von Komponente B copolymerisierte Monomere der Formel 2A und Formel 2B sind.

5. Zusammensetzung nach Anspruch 4, wobei Komponente B ein Copolymer von Perfluoralkylethyl(meth)acrylat und Dimethylaminoethyl(meth)acrylat ist.

6. Zusammensetzung nach Anspruch 1, ferner aufweisend ein Mikrobiozid.

7. Zusammensetzung nach Anspruch 1, worin 80 Prozent des Fluor-Gesamtgehaltes in der Fluoralkylphosphat-Lösung sind.

8. Zusammensetzung nach Anspruch 1, worin der Fluor-Gesamtgehalt 0,25% bis 7,5 Gewichtsprozent beträgt.

9. Verfahren für die Herstellung einer Zusammensetzung nach Anspruch 1, welches Verfahren umfasst: 1) Zugeben von Wasser zu einer Dispersion des kationischen Copolymers der Komponente B und Mischen, um ein verdünntes Copolymer zu liefern, 2) Zugeben der anionischen Fluoralkylphosphat-Lösung der Komponente A zu dem verdünnten Copolymer von Komponente B und 3) Mischen oder Homogenisieren.

10. Verfahren nach Anspruch 9, wobei die Menge des zu der Komponente B pro 100g der Zusammensetzung zugegebenen Wassers gleich 100 minus das Gesamtgewicht von Komponente A und Komponente B beträgt.

11. Verfahren zum Behandeln eines Substrats, umfassend das Auftragen einer Zusammensetzung nach Anspruch 1 auf die Oberfläche des Substrats.

12. Verfahren nach Anspruch 11, wobei die Zusammensetzung als eine erste Beschichtung aufgetragen wird, gefolgt von mindestens einer weiteren Beschichtung.

13. Verfahren nach Anspruch 12, wobei die zusätzliche Beschichtung aufgetragen wird, bevor die erste Beschichtung trocken geworden ist.

14. Verfahren nach Anspruch 11, wobei das Substrat eine Zusammensetzung ist, die Calciumcarbonat enthält.

15. Verfahren nach Anspruch 11, wobei das Substrat poröser Beton ist, Mauerziegel, Dachziegel, Stein, Granit, Kalkstein, Einpressmörtel, Mörtel, Verbundstoffmaterial, Gipskartonplatte, Marmor, Bildhauerei, Denkmäler oder Holz ist.

16. Substrat, behandelt mit der Zusammensetzung nach Anspruch 1.

17. Substrat nach Anspruch 16, das eine Calciumcarbonat enthaltende Zusammensetzung ist.

18. Substrat nach Anspruch 16, das poröser Beton ist, Mauerziegel, Dachziegel, Stein, Granit, Kalkstein, Einpressmörtel, Mörtel, Verbundstoffmaterial, Gipskartonplatte, Marmor, Bildhauerei, Denkmäler oder Holz ist.

## Revendications

1. Composition comprenant un premier mélange aqueux, ayant un rapport molaire maximal d'acide à base de 0,6 et repoussant l'eau lorsqu'elle est appliquée sur une surface de substrat sans corroder ladite surface de
A. une solution de phosphate de fluoroalkyle aqueuse anionique qui constitue au moins 75% de la teneur en fluor totale dudit premier mélange, comprenant
1) un deuxième mélange de phosphate de mono(perfluoroalkyle) et de phosphate de bis(perfluoroalkyle) de formule IA
[R_{f}-(O)ⱼ]ₓ-P(O)-(O⁻X⁺)₍₃₋ₓ₎ Formule 1A
dans laquelle :
R_{f} est choisi dans le groupe comprenant
F(CF₂CF₂)_{d}(CH₂)a-
F(CF₂CF₂)_{d}CH₂CH₂(OCH₂CH₂)_{b}-
F(CF₂CF₂)_{d}-,
F(CF₂CF₂)_{d}CH=CH(CH₂)_{c}-,
et
C₈F₁₇SO₂N(R₅)CH₂CH₂-;
a vaut de 2 à 10,
b vaut de 3 à 20,
c vaut de 2 à 20,
d vaut de 1 à 8, ou un mélange de ceux-ci,
R₅ est H ou un groupe aliphatique contenant 1 à 4 atomes de carbone,
x vaut de 1 à 2,
j vaut 1 ou 0, ou un mélange de ceux-ci, et
X est un atome d'hydrogène ou M,
M est un ion ammonium, un ion de métal alcalin ou un ion d'alcanolammonium, ou
2) un phosphate de structure de formule IB 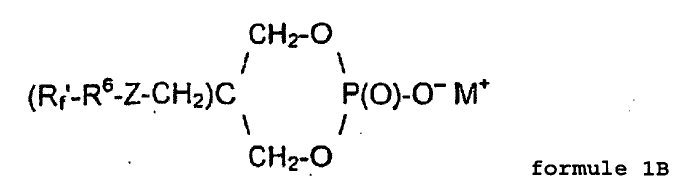 dans laquelle
R_{f}' est un groupe fluoro-aliphatique ayant une chaîne de perfluorocarbone linéaire ou ramifiée ayant de 2 à 20 atomes de carbone,
R⁶ est un groupe alkylène ayant de 1 à 8 atomes de carbone,
Z est -O-, -S- ou -NH-, et
M est tel que défini dans la formule IA et
B. un copolymère cationique de fluoroalkyl(méth)acrylate ou de perfluoroalkyléther (méth)acrylate présent à un niveau minimal de 0,3 g pour 100 g dudit premier mélange et comprenant des monomères copolymérisés dans les pourcentages en poids suivants :
(a) de 40% à 92% d'au moins un monomère de formule 2A
R_{f}-Q-A-C (O) -C (R₇) =CH₂ 2A
dans laquelle
R_{f} est un groupe fluoro-aliphatique ayant une chaîne de perfluorocarbone linéaire ou ramifiée ayant de 2 à 20 atomes de carbone,
R₇ est H ou un groupe aliphatique contenant 1 à 4 atomes de carbone,
A est O, S ou NR¹, R¹ étant H ou un groupe alkyle comportant 1 à 4 atomes de carbone, et
Q est un groupe alkylène de 1 à 15 atomes de carbone, hydroxyalkylène de 3 à 15 atomes de carbone, - (CₙH₂ₙ) (OC_{q}H_{2q})ₘ-, -SO₂-NR¹ (CₙH₂ₙ) - ou -CONR¹ (CₙH₂ₙ) -,
où R¹ est H ou un groupe alkyle de 1 à 4 atomes de carbone, n vaut 1 à 15, q vaut 2 à 4 et m vaut 1 à 15 ; et
R est un atome d'hydrogène ou un groupe alkyle en C1 à C2,
(b) de 1% à 50% d'un monomère de formule 2B
(CH₂ = C (R₇) COW (CH₂) ᵣ⁺NR²R³R⁴)Y- 2B
dans laquelle
R₇ est H ou un groupe aliphatique contenant 1 à 4 atomes de carbone,
R² et R³ sont chacun respectivement un groupe alkyle comportant 1 à 4 atomes de carbone, un groupe hydroxy-éthyle ou benzyle ou R² et R³ conjointement avec l'atome d'azote forment un cycle morpholine, pyrrolidine ou pipéridine,
R⁴ est H ou un groupe alkyle de 1 à 4 atomes de carbone, ou R², R³ et R⁴ conjointement avec l'atome d'azote forment un cycle pipéridine,
W est -O- ou -NR⁴-
r vaut 2 à 4, et
Y⁻ est un anion,
à condition que l'atome d'azote soit quaternisé de 40% à 100% ; et
(c) de 0% à 20% d'un monomère anionique ou d'un monomère qui est potentiellement anionique en faisant varier le pH ;
(d) de 0% à 10% d'un dérivé vinylique de formule 2C
R₈-CH=CH₂ 2C
dans laquelle
R₈ est un alkyl-carboxylate ou un groupe alkyléther contenant de 1 à 18 atomes de carbone ; et
(e) de 0 à 25% d'au moins un monomère de formule 2D
CH₂=C (R₉) -C (O) -O-V-OH 2D
dans laquelle
R⁹ est H ou un groupe alkyle de 1 à 4 atomes de carbone, et
V est un alkylène de 2 à 4 atomes de carbone ; et
(f) de 0 à 30% d'un monomère autre que les monomères des composants (a) à (e) décrits ci-dessus,
à condition que les pourcentages en poids des composants (a) à (f) décrits ci-dessus totalisent 100%.

2. Composition selon la revendication 1, dans laquelle la solution de phosphate de fluoroalkyle du composant A est un mélange de phosphate de mono(perfluoroalkyl) et de phosphate de bis(perfluoroalkyl) de formule IA.

3. Composition selon la revendication 2, dans laquelle la solution de phosphate de fluoroalkyle du composant A est un mélange de sels diéthanolamine de phosphate de perfluoroalkyléthyle.

4. Composition selon la revendication 1, dans laquelle le copolymère du composant B est constitués de monomères copolymérisés de formule 2A et de formule 2B.

5. Composition selon la revendication 4, dans laquelle le composant B est un copolymère de perfluoroalkyléthyl(méth)acrylate et de diméthylaminoéthyl(méth)acrylate.

6. Composition selon la revendication 1, comprenant en outre un microbicide.

7. Composition selon la revendication 1, dans laquelle 80% de la teneur en fluor totale se trouve dans la solution de phosphate de fluoroalkyle.

8. Composition selon la revendication 1, dans laquelle la teneur en fluor totale est de 0,25 à 7,5 pourcent en poids.

9. Procédé de préparation d'une composition selon la revendication 1, comprenant 1) l'addition d'eau à une dispersion du copolymère cationique du composant B et le mélange pour donner un copolymère dilué ; 2) l'addition de la solution de phosphate de fluoroalkyle anionique du composant A au copolymère dilué du composant B, et 3) le mélange ou l'homogénéisation.

10. Procédé selon la revendication 9, dans lequel la quantité d'eau ajoutée au composant B pour 100 g de composition est égale à 100 moins le poids total du composant A et du composant B.

11. Procédé de traitement d'un substrat comprenant l'application sur la surface du substrat d'une composition selon la revendication 1.

12. Procédé selon la revendication 11, dans lequel la composition est appliquée en tant que premier revêtement suivi d'au moins un revêtement supplémentaire.

13. Procédé selon la revendication 12, dans lequel le revêtement supplémentaire est appliqué avant que sèche le premier revêtement.

14. Procédé selon la revendication 11, dans lequel le substrat est une composition contenant du carbonate de calcium.

15. Procédé selon la revendication 11, dans lequel le substrat est le béton, la brique, les tuiles, la pierre, le granite, la pierre à chaux, le ciment, le mortier, des matériaux composites, une plaque de plâtre, le marbre, les statuaires, les monuments ou le bois, non apprêtés.

16. Substrat traité avec la composition selon la revendication 1.

17. Substrat selon la revendication 16, qui est une composition contenant du carbonate de calcium.

18. Substrat selon la revendication 16, qui est le béton, la brique, les tuiles, la pierre, le granite, la pierre à chaux, le ciment, le mortier, des matériaux composites, une plaque de plâtre, le marbre, les statuaires, les monuments ou le bois, non apprêtés.
